Europäisches Patentamt

European Patent Office

Office européen des brevets

(19)

(11) Veröffentlichungsnummer : **0 100 907 B2**

(12) **NEUE EUROPÄISCHE PATENTSCHRIFT**

(45) Veröffentlichungstag der neuen Patentschrift :
29.05.91 Patentblatt 91/22

(51) Int. Cl.⁵ : **B01D 53/02,** B01D 53/34,
F24F 3/16

(21) Anmeldenummer : **83106922.4**

(22) Anmeldetag : **14.07.83**

(54) **Luftreinigunsgerät.**

(30) Priorität : 28.07.82 DE 3228156

(43) Veröffentlichungstag der Anmeldung :
22.02.84 Patentblatt 84/08

(45) Bekanntmachung des Hinweises auf die
Patenterteilung :
28.05.86 Patentblatt 86/22

(45) Bekanntmachung des Hinweises auf die
Entscheidung über den Einspruch :
29.05.91 Patentblatt 91/22

(84) Benannte Vertragsstaaten :
AT BE CH DE FR GB IT LI LU NL SE

(56) Entgegenhaltungen :
CH-A- 586 304
DE-A- 2 400 827
DE-A- 2 501 013
DE-A- 2 820 314
DE-A- 2 824 041
DE-A- 2 938 234
DE-B- 1 279 917
DE-B- 2 804 154
DE-C- 2 951 827
US-A- 4 181 513

(56) Entgegenhaltungen :
Patent Abstracts of Japan, Band 6, Nr. 197, 6.
Oktober 1982
Lünenschloss/Albrecht "Vliesstoffe", 1982,
Georg Thieme Verlag, Stuttgart, Kapitel 1, 2, 4
"Taschenbuch für die Textilindustrie", 1980,
Fachverlag Schiele & Schöne, Kapitel
"Vliesstoffe auf Heterofilbasis"

(73) Patentinhaber : von Blücher, Hubert
Freytagstrasse 45
W-4000 Düsseldorf (DE)
Patentinhaber : von Blücher, Hasso
Sohnstrasse 58
W-4000 Düsseldorf (DE)
Patentinhaber : de Ruiter, Ernest, Dr.
Höhenstrasse 57a
W-5090 Leverkusen 3 (DE)

(72) Erfinder : von Blücher, Hubert
Freytagstrasse 45
W-4000 Düsseldorf (DE)
Erfinder : von Blücher, Hasso
Sohnstrasse 58
W-4000 Düsseldorf (DE)
Erfinder : de Ruiter, Ernest, Dr.
Höhenstrasse 57a
W-5090 Leverkusen 3 (DE)

(74) Vertreter : Eggert, Hans-Gunther, Dr.
Räderscheidtstrasse 1
W-5000 Köln 41 (DE)

EP 0 100 907 B2

## Beschreibung

Es ist bekannt, daß sich für die Teilnehmer am Straßenverkehr in der Fahrgastzellen vor Kraftfahrzeugen durch die Abgase der Kraftfahrzeuge, insbesondere im Stadtverkehr, bei Fahrzeugkolonnen und bei Verkehrsstaus erhebliche Gesundheitsrisiken ergeben.

Die DE-A-2 824 041 beschreibt einen Filter für Autokabinen, der aus filternden Stützgeweben oder Vliesschichten mit dazwischen gelagerten adsorbierenden Massen, wie modifizierter Perlite oder Aktivkohle besteht.

Der Erfindung liegt die Aufgabe zugrunde, die Schadstoffkonzentration in Kraftfahrzeugkabinen mit Mitteln, die verhältnismäßig kompakt und gut transportfähig sind, auf ein normales Maß zu reduzieren.

Die Aufgabe wird gelöst durch die Verwendung von flexiblen Flächenfiltern mit einer luftdurchlässigen Trägerschicht und daran fixierten Aktivkohlekörnern in einem Luftreinigungsgerät zur Beseitigung von Geruchs- und Schadstoffen in Kraftfahrzeugkabinen. Dabei besteht die Trägerschicht aus einem textilen Flächengebilde, das heterofile Fasern enthält, die zwei koaxial angeordnete Komponenten aufweisen, von denen die äußere bei erhöhter Temperatur weich und klebrig wird ohne zu schmelzen, so daß die Aktivkohlekörner daran fixiert werden. Ein derartiger Flächenfilter ist Gegenstand der am 14. Januar 1982 angemeldeten und am 21. Juli 1983 offengelegten DE-A-3 200 959.

Das das Adsorbens enthaltende oder tragende Flächenfilter ist flexibel, d.h. biegsam und geschmeidig wie ein textiles Flächengebilde. Im Unterschied zu Schutzfiltern werden Flächenfilter teils angeströmt, teils durchströmt. Dabei läßt sich der Druckabfall durch die Anordnung und Beschaffenheit des Filters hinsichtlich der Art des Trägers. Dichte der Beladung, Größe der Adsorbentia usw. in weitem Maße beeinflussen und den Erfordernissen anpassen.

Flächenfilter haben den großen Vorteil, daß sie sich in sehr einfacher Weise an die jeweiligen Erfordernisse anpassen und in der verschiedensten Weise herstellen lassen So ist beispielsweise ein große nutzbare Filterfläche durch ziehharmonikaähnelnde Zick-Zack-Faltung oder auch durch Anordnung in Form runder Wickel erzielbar.

Von großer Wichtigkeit für die Effektivität des erfindungsgemäßen Luftumwälzungsgerätes ist die richtige Wahl des Adsorbens. Als Adsorbens wird für die Zwecke der Erfindung Aktivkohle verwendet, die aus geeigneten organischen Materialien in bekannter Weise hergestellt werden kann. Neben einer hohen Unempfindlichkeit gegen Feuchtigkeit, sollte die Aktivkohle auch in der Lage sein, schwer adsorbierbare Stoffe, wie Schwefel- und Stickstoffoxide, zu binden. Die innere und äußere Oberfläche der Adsorbentien kann mit Additiven, wie Schwermetallkatalysatoren oder flammhemmenden, antibakteriellen oder fungiziden Substanzen beladen sein. Vorzugsweise wird eine modifizierte, beispielsweise gemäß der DE-A-3 013 255 hergestellte Aktiv-Kohle oder auch eine stickstoffmodifizierte Aktiv-Kohle verwendet.

Die Dimensionierung des Filters hängt von der Größe des Raums ab, in welchem die Schad-und-/oder Geruchsstoffkonzentration herabgesetzt werden soll, aber auch von der Schad-und/oder Geruchsstoffkonzentration selbst.

Entsprechend wird man beispielsweise für den Innenraum eines Personenkraftwagens, der mit gedrosselter Frischluftzufuhr hinter einem qualmenden Lastkraftwagen herfährt, das Filter so bemessen, daß der Luftdurchsatz pro Minute etwa dem Gesamtvolumen des Fahrzeuginnenraums entspricht. Die Menge des Adsorbens beträgt nach dem Vorschlag der Erfindung 20 bis 5000 g/m$^2$, bei textilen Trägerschichten bevorzugt 50 bis 500 g/m$^2$.

Hochwertige Adsorbentia sind bekanntlich sehr aufwendig und teuer. Um ihre Lebensdauer zu erhöhen und damit die Kosten für die Luftreinigung zu senken, sieht die Erfindung vor, dem Filter mit dem hochwertigen Adsorbens ein ebenfalls als Flächenfilter ausgebildetes und mit einem handelsüblichen preiswerten Adsorbens versehenes Filter vorzuschalten, welches nichtgasförmige Luftverunreinigungen mechanisch abscheidet, aber auch gasförmige leicht adsorbierbare Stoffe adsorbiert.

## Ansprüche

1. Verwendung eines flexiblen Flächenfilters mit einer luftdurchlässigen Trägerschicht aus einem textilen Flächengebilde, das heterofile Fasern enthält, die zwei koaxial angeordnete Komponenten aufweisen, von denen die äußere bei erhöhter Temperatur weich und kiebrig wird ohne zu schmelzen, so daß Aktivkohlekörner daran fixiert werden, in einem Luftreinigungsgerät zur Beseitigung von Geruchs- und Schadstoffen in Kraftfahrzeugkabinen.

2. Verwendung eines Flächenfilters nach Anspruch 1, dadurch gekennzeichnet, daß die Menge der Aktivkohlekörner zwischen 20 und 5000 g/m$^2$ beträgt.

3. Verwendung eines Flächenfilters nach Anspruch 1, dadurch gekennzeichnet, daß die Menge der Aktivkohlekörner zwischen 50 und 500 g/m$^2$ beträgt.

4. Verwendung eines Flächenfilters nach einem der Ansprüche 1 bis 3, dadurch gekennzeichnet, daß die Aktivkohle eine modifizierte, insbesondere stickstoffmodifizierte Aktivkohle ist.

5. Verwendung eines Flächenfilters nach einem der Ansprüche 1 bis 4 dem ein ebenfalls als Flächenfilter ausgebildetes und mit handelsüblicher Aktiv- kohle versehenes Vorfilter vorgeschaltet ist.

## Claims

1. The use of a flexible surface filter with an air-permeable support layer in the form of a flat textilelike structure, which contains heterophilic fibres, which have two coaxially arranged components, the outer of which becomes soft and sticky at increased temperature without melting, so that active carbon grains are fixed thereon, in an air-purifying apparatus to eliminate smelly substances and harmful substances in the interiors of commercial vehicles.

2. The use of a surface filter according to Claim 1, characterised in that the quantity of active carbon grains amounts to between 20 and 5000 $g/m^2$.

3. The use of a surface filter according to Claim 1, characterised in that the quantity of active carbon grains amounts to between 50 and 500 $g/m^2$.

4. The use of a surface filter according to one of Claims 1 to 3, characterised in that the active carbon is a modified, in particular, nitrogen-modified active carbon.

5. The use of a surface filter according to one of Claims 1 to 3, in front of which a prefilter is arranged, which is likewise constructed as a surface filter and is provided with conventional commercial active carbon.

## Revendications

1. Utilisation d'un filtre plan flexible comportant une couche porteuse perméable à l'air en une texture textile plane qui comporte des fibres hétérophiles qui présentent deux composants disposés coaxialement et dont le composant externe devient, lors d'une température élevée, mou et collant sans fondre, de sorte que des grains de charbon actif y sont fixés, dans un appareil de purification d'air pour éliminer dans les habitacles de véhicules automobiles des matières odorantes et des matières nuisibles.

2. Utilisation d'un filtre plan selon la revendication 1, caractérisé en ce que la quantité des grains de charbon actif est entre 20 et 5000 $g/m^2$.

3. Utilisation d'un filtre plan selon la revendication 1, caractérisé en ce que la quantité des grains de charbon actif est entre 50 et 500 $g/m^2$.

4. Utilisation d'un filtre plan selon l'une des revendications 1 à 3, caractérisé en ce que le charbon actif est un charbon actif modifié, en particulier par de l'azote.

5. Utilisation d'un filtre plan selon l'une des revendications 1 à 4, en amont duquel se trouve un filtre préliminaire conformé comme un filtre plan et muni de charbon actif usuel du commerce.